# EUROPÄISCHE PATENTSCHRIFT

(11) **EP 0 483 398 B1**
(45) Veröffentlichungstag und Bekanntmachung des Hinweises auf die Patenterteilung: **17.03.1993**
(21) Anmeldenummer: 90120779.5
(22) Anmeldetag: 30.10.1990
(51) Int. Cl.: H02P 6/02

(54) **Drehstellungsgeber für einen Gleichstrommotor**
Angular position sensor for a direct current motor
Capteur de position angulaire pour un moteur à courant continu

(43) Veröffentlichungstag der Anmeldung: 06.05.1992
(73) Patentinhaber: SIEMENS AKTIENGESELLSCHAFT, 80333 München (DE)
(72) Erfinder: Dietz, Armin, Dipl.-Ing., W-8729 Hofheim (DE); Harbauer, Werner, Dipl.-Ing., W-8702 Kürnach (DE)

(56) Entgegenhaltungen:
- DE-A- 3 424 247
- US-A- 4 761 578

## Beschreibung

Die Erfindung bezieht sich auf einen Drehstellungsgeber für einen Gleichstrommotor gemäß Oberbegriff des Anspruchs 1; ein derartiger Drehstellungsgeber ist z. B. durch das Buch: "Elektrische Meßtechnik" von E. Schrüfer im C. Hanser Verlag, Seiten 309, 310 bekannt.

Im bekannten vorgenannten Fall sind für einen inkrementalen Längen- und Winkelgeber mit richtungsabhängiger Anzeige zwei gegeneinander phasenversetzte spannungsliefernde Fotodektoren vorgesehen, deren Ausgangsspannungen in binäre Signale umgesetzt und in einer Auswertevorrichtung zu einer analogen Drehstellungsangabe verarbeitet werden, die sowohl über den Verstellwinkel als auch die Verstellrichtung des Rotors des Gleichstrommotors informiert.

Durch die US-A-4 761 578 ist es bekannt, beim Austausch eines aus zwei Anschlußklemmen gespeisten bürstenbehafteten Motors gegen einen bürstenlosen Motor zur Drehrichtungsumkehr des bürstenlosen Motors zum Richtungswechsel der Kommutierungsfrequenz ein entsprechendes Signal aus dem Polwechsel des speisenden Gleichstroms abzuleiten.

Ein gegenüber dem eingangs genannten Drehstellungsgeber für einen bürstenbehafteten Gleichstrommotor aufwandsärmerer und trotzdem betriebssicherer Drehstellungsgeber der eingangs genannten Art ist erfindungsgemäß dadurch möglich, daß die Auswertevorrichtung zur Drehrichtungsinformation an einen Hysterese-Drehrichtungsschalter mit entsprechend der Polung der Speisespannung des Gleichstrommotors unterschiedlichem binären Signal angeschlossen ist; erfindungsgemäß wird der Verstellweg des Rotors mit einem einzigen inkrementalem Geber erfaßt, die Dehrichtung jedoch aus der am Gleichstrommotor jeweils anliegenden Spannung mit entsprechend unterschiedlicher Polung abgeleitet, derart daß die Drehrichtungsinformation auch bei Ausfall der speisenden Motorspannung bzw. bei Neutral-Stellung des den Gleichstrommotor an das speisende Netz anschließenden Spannungsschalters zur Verfügung bleibt.

Die Erfindung sowie weitere vorteilhafte Ausgestaltungen der Erfindung gemäß Merkmalen der Unteransprüche werden im folgenden anhand eines schematisch dargestellten Ausführungsbeispiels in der Zeichnung näher erläutert; darin zeigen:
FIG 1 den grundsätzlichen Aufbau eines erfindungsgemäßen Drehstellungsgebers;
FIG 2 den Schaltungsaufbau des in FIG 1 verwendeten Hysterese-Schalters;
FIG 3 das Schaltverhalten des Hysterese-Schalters gemäß FIG 2.

Der Gleichstrommotor 1 eines z.B. Kraftfahrzeug-Servoantriebes für eine motorische Sitzverstellung ist über einen Spannungsschalter 2 mit einer Schaltstellung I für die eine Drehrichtung "VORWÄRTS", einer Schaltstellung III für die andere Drehrichtung "RÜCKWÄRTS" und einer Neutralstellung II an ein Kraftfahrzeug Bordnetz P;N anschließbar. Mit der Rotorwelle des Gleichstrommotors 1 rotiert ein Magnetrad 1.1, das in einem statorseitigen Hallsensor 3.3 Impulsfolgen erzeugt, aus deren Zahl auf die Verstellänge bzw. den Verstellwinkel des Rotors geschlossen werden kann.

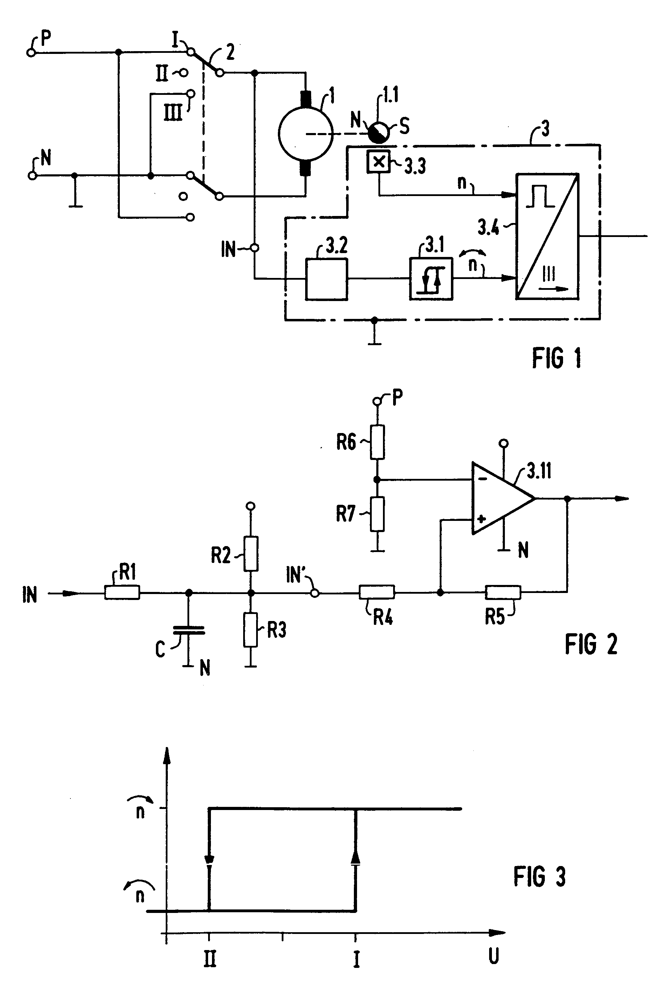

Zur zusätzlichen Drehrichtungserkennung ist als Teil des Drehstellungsgebers 3 weiterhin ein Hysterese-Schalter 3.1 vorgesehen, der über einen Tiefpaß 3.2 an den Spannungsumschalter 2 angeschlossen ist. Durch den nach einer Ausgestaltung der Erfindung dem Hysterese-Schalter 3.1 vorgeschalteten, gemäß FIG 2 im einfachsten Fall aus einem Widerstand R1 und einem Kondensator C bestehenden Tiefpaß R2 werden Schaltfehler durch Unterdrücken von Spannungsspitzen auf der Motorleitung verhindert.

Gemäß FIG 2 besteht nach einer Ausgestaltung der Erfindung der Hysterese-Schalter 3.1 aus einem Operationsverstärker 3.11, dem über seine Schaltschwellen definierende Spannungsteilerwiderstände R4;R5 bzw. R6;R7 seine Eingangs-Spannungssignale zugeführt sind. Die derart festgelegten Schaltschwellen liegen zwischen der minimalen und maximalen Ausgangsspannung des Operationsverstärkers 3.11.

FIG 3 zeigt in einem Ausführungsbeispiel die jeweils am Eingang IN' in FIG 2 anstehende Spannung bei Erreichen der Schaltschwelle in der Stellung I des Spannungsumschalters 2 entsprechend der einen Drehrichtung 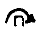 bzw. in der Stellung III nach dem Umschalten des Spannungsumschalters 2 in die andere Drehrichtung 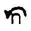 des Gleichstrommotors 1.

Bei Umlegen des Spannungsumschalters 2 in die Stellung II wird der Gleichstrommotor 1 spannungslos geschaltet, jedoch die Ausgangsspannung des Hysterese-Schalters 3.1 auf dem vorhergehenden Wert gehalten, derart daß die nachgeschaltete Auswertevorrichtung 3.4 trotzdem aufgrund der eingehenden Zahl der Impulse für die Verstellänge bzw. den Verstellwinkel eine vollständige und richtige Drehstellungsangabe ausgangsseitig anzeigen kann.

Ein Spannungsteiler, der von R2,R3 gebildet wird, bestimmt die Spannung am Hystereseschaltereingang IN′, wenn der Spannungsumschalter 2 in neutraler Stellung II steht. Vorzugsweise werden R2,R3 so gewählt, daß diese Spannung den Mittelwert der beiden Schaltschwellen des Hysterese-Schalters 3.1 in einen neuen Schaltzustand zu bringt. Befindet sich der Spannungsumschalter 2 in Schaltstellung II, ändert sich der Ausgang des Hysterese-Schalters nicht.

Wird der Spannungsumschalter 2 in Stellung I gebracht, steigt die Spannung am Hysterese-Schalter an. Die Schaltschwelle I des Hysterese-Schalters 3.1 ist nun so festgelegt, daß die anliegende Spannung sicher über der eingestellten Schaltschwelle I liegt (FIG.3). Der Hysterese-Schalter wird daher den Schaltzustand 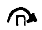 (FIG.3) annehmen. Bei Rückstellen des Spannungsumschalters 2 in Stellung II ändert sich der Zustand des Hysterese-Schalters nicht, da nun die durch den Spannungsteiler R2,R3 festgelegte Spannung am Hysterese-Schalter liegt und diese Spannung zwischen den Schaltschwellen I und II (FIG.3) des Hysterese-Schalters liegt. Wird der Spannungsumschalter 2 in Stellung III gebracht, wird die untere Hystereseschaltschwelle II (FIG.3) vom Eingang IN′ unterschritten und der Hysterese-Schalter gibt den Zustand 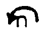 aus. Eine Rückstellung in die Schaltstellung II des Spannungsumschalters 2 führt ebenfalls zu keiner Zustandsänderung des Hysterese-Schalters 3.1.

## Patentansprüche

1. Drehstellungsgeber für einen Gleichstrommotor (1), insbesondere Kraftfahrzeug-Servomotor, mit einem inkrementalen Wegimpuls-Geber (1.1;3.3) und einer dessen Signal verarbeitenden Auswertevorrichtung (3.4), **dadurch gekennzeichnet,** daß der Gleichstrommotor (1) über einen, zumindest die Schaltstellungen "Vorwärts" bzw. "Rückwärts" und "Neutral" aufweisenden Spannungsschalter (2) an eine Speisespannung (Bordnetz P;N) angeschlossen ist und daß die Auswertevorrichtung (3.4) zur Drehrichtungsinformation an einen Hysterese-Schalter (3.1) mit entsprechend der Polung der Speisespannung (Bordnetz P;N) des Gleichstrommotors (1) unterschiedlichem binären Signal angeschlossen ist.

2. Drehstellungsgeber nach Anspruch 1, **dadurch gekennzeichnet,** daß dem Hysterese-Schalter (3.1) ein Tiefpaß (3.2) vorgrschaltet ist.

3. Drehstellungsgeber nach Anspruch 1 oder 2,
**gekennzeichnet** **durch** einen inkrementalen Wegimpuls-Geber mit einem statorseitigen Hall-Sensor (3.3).

4. Drehstellungsgeber nach einem der Ansprüche 1 bis 3,
**gekennzeichnet durch** einen Hysterese-Schalter (3.1) mit einem Operationsverstärker (3.11) mit durch vorgeschaltete Spannungsteiler-Widerstände (R6;R7 bzw. R4;R5) festgelegten Schaltschwellen.

## Claims

1. Rotary position sensor for a direct-current motor (1), in particular a motor-vehicle servomotor, having an incremental path pulse sensor (1.1;3.3) and an evaluation device (3.4) processing the path pulse sensor signal, characterized in that the direct-current motor (1) is connected to a feed voltage (vehicle network P;N) by way of a voltage switch (2) having at least the switching positions "forwards" or "backwards" and "neutral", and in that the evaluation device (3.4) for the information on the direction of rotation is connected to a hysteresis switch (3.1) with binary signal which is different according to the poling of the feed voltage (vehicle network P;N) of the direct-current motor (1).

2. Rotary position sensor according to claim 1, characterized in that a low-pass filter (3.2) is connected in series with the hysteresis switch (3.1).

3. Rotary position sensor according to claim 1 or 2, characterized by an incremental path pulse sensor with a stator-side Hall sensor (3.3).

4. Rotary position sensor according to one of claims 1 to 3, characterized by a hysteresis switch (3.1) with an operational amplifier (3.11) with operating points fixed by series-connected voltage-divider resistances (R6;R7 or R4;R5),

## Revendications

1. Capteur de position angulaire pour un moteur à courant continu (1), notamment un servomoteur pour véhicule automobile, comportant un transmetteur incrémental d'impulsions de déplacement (1.1; 3.3) et un dispositif d'évaluation (3.4), qui traite le signal de ce transmetteur, caractérisé par le fait que le moteur à courant continu (1) est raccordé par l'intermédiaire d'un interrupteur de tension (2), qui comporte au moins les positions de commutation "marche avant" ou "marche arrière" et "neutre", à une tension d'alimentation (réseau de bord P;N) et que le dispositif d'évaluation (3.4) servant à évaluer l'information du sens de rotation est raccordé à un interrupteur à hystérèse (3.1) par un signal binaire dont la polarité diffère de celle de la tension d'alimentation (réseau de bord P;N) du moteur à courant continu (1).

2. Capteur de position angulaire suivant la revendication 1, caractérisé par le fait qu'un filtre passe-bas (3.2) est branché en amont de l'interrupteur à hystérèse (3.1).

3. Capteur de position angulaire suivant la revendication 1 ou 2, caractérisé par un transmetteur incrémental d'impulsions de déplacement équipé d'un capteur de Hall (3.3) situé côté stator.

4. Capteur de position angulaire suivant l'une des revendications 1 à 3, caractérisé par un interrupteur à hystérèse (3.1) comportant un amplificateur opérationnel (3.11) pourvu de seuils de commutation fixés par les résistances de division de tension (R6;R7 ou R4;R5) branchées en amont.
